Europäisches Patentamt

European Patent Office

Office européen des brevets

(19)

(11) Numéro de publication: **0 145 581**
A2

# (12) DEMANDE DE BREVET EUROPEEN

(21) Numéro de dépôt: 84402438.0

(22) Date de dépôt: 29.11.84

(51) Int. Cl.⁴: **H 05 B 3/26**, F 16 L 47/02

(30) Priorité: 07.12.83 FR 8319555

(43) Date de publication de la demande: 19.06.85
Bulletin 85/25

(84) Etats contractants désignés: AT BE CH DE FR GB IT LI
LU NL SE

(71) Demandeur: SOCIETE D'ETUDES DE RECHERCHES ET
D'APPLICATIONS DES PLASTIQUES (S.E.R.A.P.), 6, rue
Cognacq-Jay, F-75007 Paris (FR)

(72) Inventeur: Chudet, Pierre, 11, rue de Metz,
F-60200 Compigne (FR)
Inventeur: Ducamp, Gérard, 20, rue de Tilloloy,
F-60200 Bienville (FR)

(74) Mandataire: Jacobson, Claude, L'AIR LIQUIDE,
SOCIETE ANONYME POUR L'ETUDE ET
L'EXPLOITATION DES PROCEDES GEORGES
CLAUDE 75, quai d'Orsay, F-75321 Paris Cedex 07 (FR)

(54) **Raccord de branchement en charge, résistance électrique pour un tel raccord et son procédé de fabrication.**

(57) La tubulure de raccordement (18) se termine par une selle
(20) en matière thermoplastique à l'intérieur de laquelle un
évidement annulaire (23) est ménagé autour de l'orifice (22) de
la tubulure. Dans cet évidement est fixée une résistance électrique (14) de forme correspondante qui dépasse légèrement.
Cette résistance est constituée par un fil métallique gaîné
que l'on a plié en son milieu, enroulé en spirale puis chauffé
pour souder ensemble toutes les spires de façon à réaliser une
galette à faces à peu près lisses.

Application au branchement sur des conduites en matière
thermoplastique en charge.

EP 0 145 581 A2

La présente invention est relative à la technique du raccordement sur les conduites en charge réalisées en une matière plastique thermoplastique telle qu'une polyoléfine.

Un raccord ou té de branchement en charge, encore dénommé par certains fabricants collier de prise en charge, est un élément destiné à faire un piquage de fluide sur une canalisation principale sous pression pour alimenter un nouvel utilisateur ; l'opération doit pouvoir être effectuée sans interrompre ni perturber l'alimentation des autres utilisateurs déjà branchés sur la canalisation principale, ce qui implique que ce piquage doit pouvoir être réalisé sans fuite intempestive de fluide ; lorsqu'il s'agit d'un gaz inflammable ou toxique, l'absence de fuite, même légère, est souhaitée pour des raisons de sécurité.

Avec le développement des conduites en polyoléfines, polyéthylène haute densité ou polypropylène, on a proposé des raccords de branchement en charge qui se fixent sur la conduite principale par une opération de soudage. En particulier, le FR-A-2.171.223 décrit un raccord de branchement en charge du type comprenant une tubulure de raccordement pourvue à une extrémité d'une selle en matière thermoplastique, des moyens de serrage de cette selle contre une conduite, et une résistance électrique de forme générale annulaire disposée à demeure autour de l'orifice de la tubulure, en saillie par rapport à la selle.

Bien que théoriquement satisfaisant, ce raccord connu n'est pas exploitable industriellement de façon économiquement acceptable ; en effet, fixer par surmoulage dans la selle une résistance électrique constituée par une spirale à spires parfaitement jointes pose des problèmes technologiques extrêmement difficiles.

Un autre raccord d'un type voisin est décrit dans le FR-A-2.301.361. Dans celui-ci, on réalise un insert en matière thermoplastique dans lequel une résistance spiralée est incorporée par soudage. Outre la complexité de structure de la selle et les difficultés d'assemblage précis résultant des tolérances de moulage de matières plastiques, on remarque que le mode de fabrication de l'insert est très délicat : on se demande comment on peut manipuler sans support une spirale plate constituée d'un simple fil électrique gaîné. De plus, la hauteur finale de saillie de la résistance par rapport à la selle paraît difficilement contrôlable.

L'invention a pour but de fournir un raccord de branchement en charge qui, tout en assurant une soudure fiable et homogène de la selle sur la conduite et une étanchéité parfaite de la liaison, puisse être réalisé de façon économique à l'échelle industrielle.

A cet effet, l'invention a pour objet un raccord de branchement en charge du type précité, caractérisé en ce que la résistance est constituée par une galette rapportée à faces à peu près lisses comprenant un fil métallique noyé dans un enrobage en matière thermoplastique, cette galette étant fixée dans un évidement annulaire prévu dans la selle autour dudit orifice.

L'invention a également pour objet une résistance électrique convenant pour un raccord de branchement en charge tel que défini ci-dessus. Cette résistance est caractérisée en ce qu'elle est constituée par une galette à faces à peu près lisses comprenant un fil métallique noyé dans un enrobage en matière thermoplastique, le fil métallique étant plié en deux en son milieu et enroulé en spirale, les extrémités du fil se trouvant à l'extérieur de la spirale et définissant deux bornes de liaison à un générateur de courant électrique.

L'invention a encore pour objet un procédé de fabrication d'une telle résistance électrique. Suivant ce procédé, on plie en deux en son milieu un fil métallique gaîné ; on l'enroule en spirale entre deux plateaux pressés l'un vers l'autre ; on chauffe la gaîne du fil jusqu'à sa température de ramollissement ; et on augmente la pression entre les deux plateaux pour souder les spires les unes aux autres.

Un exemple de réalisation de l'invention va maintenant être décrit en regard des dessins annexés, sur lesquels :
- la figure 1 est une vue en coupe qui illustre la fabrication d'une résistance électrique conforme à l'invention ;
- la figure 2 est une vue prise en coupe suivant la ligne II-II de la figure 1 ;
- la figure 3 est une vue en perspective de la résistance terminée ;
- la figure 4 est une vue en perspective de la selle d'un raccord conforme à l'invention ;
- la figure 5 est une vue analogue de la même selle équipée de la résistance de la figure 3 ; et

- la figure 6 est une vue en coupe transversale qui illustre schématiquement la manière dont cet assemblage est réalisé.

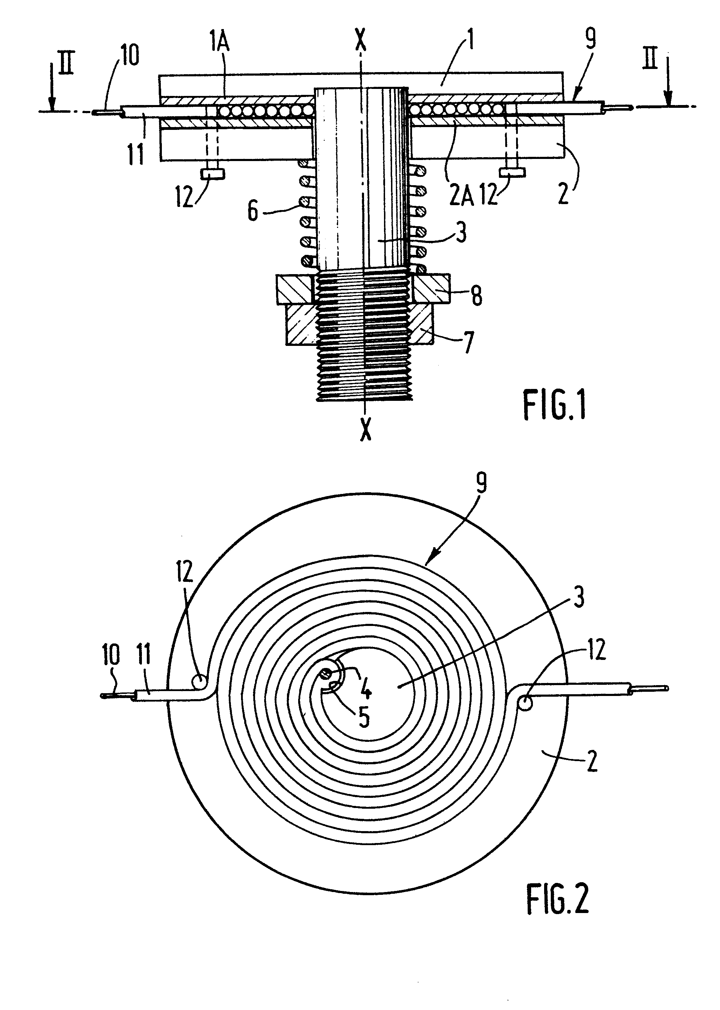

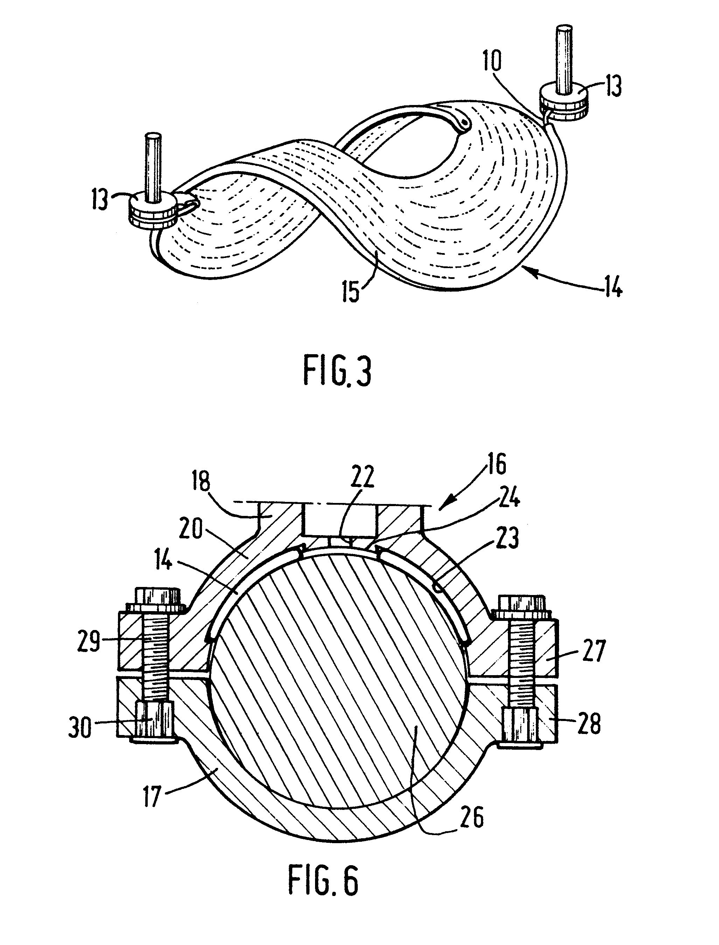

En se référant tout d'abord aux figures 1 et 2, on réalise de la manière suivante la résistance électrique représentée à la figure 3.

On utilise un outil qui comprend deux plaques circulaires 1 et 2 de même axe X-X revêtues sur leurs faces en regard d'une couche 1A, 2A de matière électriquement isolante. La plaque 1 est fixée coaxialement à une extrémité d'un noyau cylindrique 3 dont l'autre extrémité est filetée. Cette plaque 1 est pourvue d'une broche 4 parallèle à l'axe X-X, en saillie vers la plaque 2 et située en regard d'un évidement semi-circulaire 5 du noyau 3. La plaque 2 coulisse sur le noyau 3 et peut être pressée vers la plaque 1 avec une force prédéterminée par un ressort hélicoïdal 6 enfilé sur le noyau, au moyen d'un écrou 7 vissé sur l'extrémité filetée de ce dernier et par l'intermédiaire d'une rondelle 8.

On plie en deux, en son milieu, un fil composite 9 à section circulaire constitué d'un fil métallique 10 enrobé dans une gaîne 11 en matière thermoplastique. On accroche la boucle ainsi formée sur la broche 4, on met en place sur le noyau 3 la plaque 2, le ressort 6, la rondelle 8 et l'écrou 7. On serre modérément ce dernier, et l'on fait tourner le noyau. Le fil 9 s'enroule ainsi en une double spirale à spires jointives jusqu'au diamètre extérieur désiré, la pression exercée par les deux plaques évitant tout chevauchement des spires. On introduit alors deux broches 12 dans deux trous diamétralement opposés de la plaque 2, et on replie à angle droit vers l'extérieur autour de ces broches l'extrémité libre des deux brins du fil 9.

Ensuite, on relie les extrémités dénudées du fil 10 à un générateur de courant électrique jusqu'à ramollissement de la gaîne 11. Aussitôt après, on visse rapidement l'écrou 7 pour augmenter la pression exercée par les plaques 1 et 2, de sorte que la matière plastique vient emplir les espaces vides existant entre les spires. Puis on laisse refroidir l'ensemble, on dévisse complètement l'écrou 7, on retire la rondelle 8, le ressort 6 et la plaque 2, et l'on extrait la galette annulaire plate ainsi obtenue. Cette galette présente des surfaces inférieure et supérieure à peu près plates, et la matière plastique forme un enrobage 15 maintenant la cohésion du

4 0145581

double fil métallique spiralé qui y est noyé.

Cette galette est ensuite cintrée avec un outil approprié (non représenté) suivant le rayon extérieur de la conduite principale (non représentée) sur laquelle doit être effectué le branchement, puis deux plots de connexion 13 en forme de clou sont fixés sur les extrémités libres du fil 10. On obtient ainsi la résistance électrique 14 en forme générale de selle de cheval qui est représentée à la figure 3.

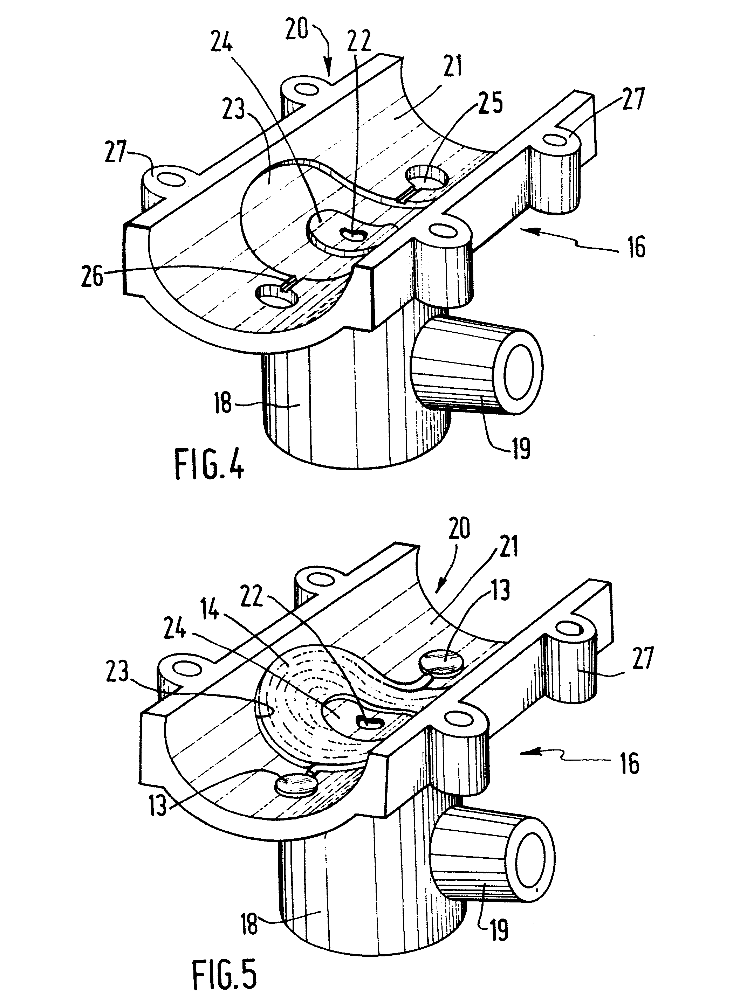

Cette résistance 14 fait partie d'un raccord de branchement en charge qui comprend également (figures 4 à 6) deux pièces moulées 16 et 17 en matière thermoplastique. De préférence, cette matière est la même que celle qui constitue l'enrobage 15 de la résistance 14 et la conduite principale et peut être exemple du polyéthylène haute densité.

La pièce 16 (figures 4 et 5) comprend une tubulure 18 dans laquelle débouche une tubulure latérale 19. Dans la tubulure 18 peut se visser un organe de perçage (non représenté). L'extrémité libre de cette tubulure peut être obturée hermétiquement par un bouchon (non représenté), tandis que son autre extrémité porte une selle 20. L'autre tubulure 19 sert au raccordement proprement dit du nouvel utilisateur qui se branche sur la conduite principale.

La selle 20 présente une surface intérieure semi-cylindrique 21 dont l'axe est perpendiculaire à celui de la tubulure 18, laquelle débouche dans la surface 21 par un orifice 22. Dans cette surface 21 est prévu un évidement annulaire 23, de profondeur sensiblement constante comprise entre environ 20 % et environ 90 % de l'épaisseur de la résistance 14, qui entoure l'orifice 22. Une plage circulaire 24 faisant partie de la surface 21 subsiste entre l'orifice 22 et l'évidement 23. De part et d'autre de l'évidement 23, dans le plan de symétrie longitudinal de la selle 20, sont prévus deux trous 25 ; une rainure 26 pratiquée dans la surface 21 parallèlement à l'axe de la selle relie chacun de ces trous à l'évidement 23.

Par ailleurs, la selle 20 porte sur chacun de ses bords longitudinaux deux bossages perforés 27.

La pièce moulée 17 (figure 6) forme un étrier semi-cylindrique de même longueur que la selle 20 et pourvu de quatre bossages perforés latéraux 28 correspondant aux bossages 27. Le rayon intérieur de cet étrier est égal à celui de la surface 21 de la selle et au diamètre extérieur de la conduite principale.

Pour équiper la pièce 16 de la résistance 14, on place celle-ci dans l'évidement 23, qui laisse subsister un jeu notable sur les périphéries intérieure et extérieure de la résistance ; on engage les plots 13 dans les trous 25 et les extrémités du fil 9 dans les rainures 26 de la selle 20, et l'on dispose l'ensemble sur un mandrin anti-adhérant 26 (figure 6) en polytétrafluoroéthylène ayant le même diamètre que la surface 21. On met en place l'étrier 17, et on le fixe à la pièce 16 au moyen de quatre boulons constitués chacun d'une vis 29 traversant une paire de bossages 27, 28 et d'un écrou 30. Les vis 29 sont serrées avec un couple prédéterminé modéré, à l'aide d'une clé dynamométrique, et l'on fait passer un courant électrique dans la résistance 14 en reliant un générateur aux plots 13. Ceci provoque une certaine fusion de l'enrobage 15 de la résistance, qui se soude ainsi au fond de l'évidement 23. On laisse ensuite refroidir, puis on démonte les pièces 16 et 17 du mandrin. En variante, on pourrait fixer la résistance 14 dans l'évidement 23 par d'autres moyens, par exemple à l'aide de quelques points de soudure. L'ensemble du raccord est alors prêt à l'emploi et la pièce 16-14 se trouve dans l'état représenté à la figure 5, la résistance 14 dépassant légèrement hors de l'évidement 23.

Pour effectuer un branchement en charge, on monte les pièces 16 et 17 autour de la conduite principale d'une manière analogue à ce qui est représenté à la figure 6 ; on serre les quatre vis 29, avec une clé dynamométrique, à un couple nettement supérieur au couple précité, et l'on fait de nouveau passer un courant électrique dans la résistance 14. L'enrobage 15 fond et, dès le début de la fusion, la surface 21 et la plage 24 s'appliquent fermement contre la conduite grâce au serrage exercé par les boulons 29, 30. En fondant, la matière de l'enrobage 15 se dilate de façon importante et, étant confinée de tout côté par les bords intérieur et extérieur de l'évidement 23, elle se met sous pression et fait fondre le fond de cet évidement et la surface extérieure de la conduite principale, réalisant ainsi une soudure sur une zone relativement étendue.

Enfin, on laisse refroidir l'ensemble, ce qui permet à la

6          0145581

masse fondue de se rétracter pour revenir à son volume initial. L'expérience montre que la soudure obtenue est parfaitement homogène et étanche et que la paroi de la conduite principale n'est pratiquement pas affectée par le fil métallique 10, lequel, par rapport à la surface 21, soit ne fait pas du tout saillie, soit ne fait que très peu saillie.

A titre d'exemple numérique, pour un branchement sur une conduite de 40 mm de diamètre extérieur, le fil 9 peut être constitué d'un fil métallique 10 de 0,8 mm de diamètre ayant une gaîne 11 de 0,6 mm d'épaisseur ; la résistance 14 a une épaisseur de 1,5 mm et l'évidement 23 une profondeur de 1 mm.

REVENDICATIONS

1. - Raccord de branchement en charge, du type comprenant une tubulure de raccordement (18) pourvue à une extrémité d'une selle (20) en matière thermoplastique, des moyens (17, 29, 30) de serrage de cette selle contre une conduite, et une résistance électrique (14) de forme générale annulaire disposée à demeure autour de l'orifice (22) de la tubulure, en saillie par rapport à la selle, caractérisé en ce que la résistance (14) est constituée par une galette rapportée à faces à peu près lisses comprenant un fil métallique (10) noyé dans un enrobage (15) en matière thermoplastique, cette galette étant fixée dans un évidement annulaire (23) prévu dans la selle (20) autour dudit orifice (22).

2. - Raccord suivant la revendication 1, caractérisé en ce que la profondeur de l'évidement (23) est comprise entre 20 % et 90 % environ de l'épaisseur de la résistance (14).

3. - Raccord suivant la revendication 2, caractérisé en ce que le fil métallique (10) est entièrement contenu à l'intérieur de l'évidement (23), comme connu en soi.

4. - Raccord suivant l'une quelconque des revendications 1 à 3, caractérisé en ce que la galette (14) est fixée à demeure dans l'évidement (23) par quelques points de soudure.

5. - Raccord suivant l'une quelconque des revendications 1 à 4, caractérisé en ce que lesdits moyens de serrage comprennent un étrier (17) et au moins un boulon, constitué d'une vis (29) et d'un écrou (30), pour serrer la selle et l'étrier autour de la conduite.

6. - Résistance électrique (14) pour raccord de branchement en charge, notamment pour raccord suivant l'une quelconque des revendications 1 à 5, caractérisée en ce qu'elle est constituée par une galette à faces à peu près lisses comprenant un fil métallique (10) noyé dans un enrobage (15) en matière thermoplastique, le fil métallique (10) étant plié en deux en son milieu et enroulé en spirale, les extrémités du fil se trouvant à l'extérieur de la spirale et définissant deux bornes de liaison à un générateur de courant électrique.

7. - Procédé de fabrication d'une résistance électrique (14) suivant la revendication 6, caractérisé en ce qu'on plie en deux en son milieu un fil métallique gaîné (9) ; on l'enroule en spirale entre deux plateaux (1, 2) pressés l'un vers l'autre ; on chauffe la gaîne (11) du fil jusqu'à sa température de ramollissement ; et on augmente la pression entre les deux plateaux pour souder les spires les unes aux autres.

FIG.1

FIG.2

0145581

FIG.3

FIG.6

FIG.4

FIG.5